# EUROPÄISCHE PATENTANMELDUNG

(11) **EP 3 103 412 A1**
(43) Veröffentlichungstag der Anmeldung: **14.12.2016**
(21) Anmeldenummer: 16181215.1
(22) Anmeldetag: 21.12.1999
(51) Int. Cl.: A61C 13/00, A61C 1/00

(54) **VERFAHREN ZUR HERSTELLUNG VON ZAHNERSATZ UND DENTALEN HILFSTEILEN**

(30) Priorität: 19.01.1999 DE 19901643
(62) Teilanmeldung aus: 07009207.7
(71) Anmelder: BEGO Bremer Goldschlägerei Wilh.-Herbst GmbH & Co KG, 28359 Bremen (DE)
(72) Erfinder: DOLABDJIAN, Haig, 28359 Bremen (DE); STRIETZEL, Roland, 28359 Bremen (DE)
(74) Vertreter: Eisenführ Speiser

(57) **Zusammenfassung**

Zur Herstellung von Zahnersatz wird die Anwendung des Laser-Sinterverfahrens vorgeschlagen, bei dem aus einem sinterfähigen Pulver schichtweise Formkörper aufgebaut werden, indem sukzessive jede Schicht des Pulvers einer zum lokalen Sintern führenden Energie eines Laserstrahls ausgesetzt wird, wobei die Führung des Laserstrahls über die jeweilige Pulverschicht der Steuerung durch Daten unterliegt, welche die Konfiguration des Formkörpers in dieser Schicht repräsentieren, wobei das Pulver aus einem biokompatiblen Werkstoff von unterschiedlicher Korngröße zwischen 0 und 50 µm besteht.

## Beschreibung

Zahnersatz, wie Kronen, Brücken, Inlays u. dgl., besteht regelmäßig aus komplexen Formkörpern, die meist einerseits die räumliche Konfiguration erhalten gebliebener Zahnteile (Zahnstümpfe), verloren gegangener ganzer Zähne oder Teile des Kiefers und andererseits die räumliche Situation gegenüber benachbarten und/oder antagonistischen Zähnen individuell berücksichtigen müssen. Nach dem Stand der Technik wird derartiger Zahnersatz in aufwendigen Verfahren hergestellt. Wohl am weitesten verbreitet ist die Fertigung der benötigten Formkörper - zumeist aus Edelmetall- oder Nichtedelmetall-Legierungen sowie ReinMetallen - in einem mehrstufigen Abform- und Gießverfahren. Bekannt geworden ist jedoch auch das datengesteuerte Fräsen solcher Formkörper aus dem vollen Material, was zwangsläufig erheblichen Abfall zur Folge hat, der aufwendig wiederaufgearbeitet werden muss bzw. hohe Kosten verursacht.

Ziel der Erfindung ist es, einen anderen, vorteilhafteren Weg zur Herstellung derartiger Formkörper (und namentlich in der Implantologie benötigter dentaler Hilfsteile) aufzuzeigen. Sie bedient sich dazu eines anderweitig, nämlich zur Herstellung von komplexen Werkzeugen oder Bauteilen unter der Bezeichnung "Rapid Prototyping" bekannt gewordenen Verfahrens, bei dem die Formkörper aus einem sinterfähigen Pulver schichtweise aufgebaut werden, indem sukzessive jede Schicht des Pulvers einer zum lokalen Sintern führenden Energie eines Laserstrahls ausgesetzt wird, wobei die Führung des Laserstrahls über die jeweilige Pulverschicht der Steuerung durch Daten unterliegt, welche die Konfiguration des Formkörpers in dieser Schicht repräsentieren. Durch die Energiezufuhr werden die jeweils betroffenen Pulverbestandteile oberflächig angeschmolzen und gehen miteinander eine feste Bindung ein. Aufgrund der engen Fokussierung des Laserstrahls lässt sich - bei hoher Dichte - die Energiezufuhr sehr genau konfigurieren und demgemäß durch die gespeicherten räumlichen Daten des gewünschten Formkörpers entsprechend steuern.

Die Erfindung sieht ferner vor, dass das Pulver aus einem biokompatiblen Werkstoff von unterschiedlicher Korngröße zwischen 0 und 50 µm besteht. Anders als bei der bisherigen Anwendung des Laser-Sinterverfahrens für technische Anwendungszwecke soll auf diese Weise sichergestellt werden, dass sich der für Dentalzwecke bestimmte Formkörper mit menschlichem Gewebe verträgt (vgl. *HoffmannAxthelm,* Lexikon der Zahnmedizin, 6./11. Aufl., S. 97 und *Reuling,* Biokompatibilität dentaler Legierungen). Der Korngrößenverlauf gewährleistet eine besonders dichte Sinterung mit dem Vorteil hoher Druckbelastbarkeit des Formkörpers und geringer Bildung von Hohlräumen, welche für die Entstehung von Bakterienkulturen anfällig wären; er legt ferner die Abmessung und Passgenauigkeit der Restauration fest.

Es ist jedoch auch möglich, das präzise lokale Kompaktieren des pulverförmigen Ausgangsmaterials auf andere Weise vorzunehmen, sei es durch andersartige Energiezufuhr oder - im Falle von Kunststoffen als Ausgangsmaterial - durch lokal begrenzte Polymerisationssteuerung. Im Allgemeinen aber wird eine optisch fokussierbare elektromagnetische Strahlung anderen Maßnahmen - wie etwa einer im Vakuum vorzunehmenden Korpuskularstrahlung - für die Energie-Übertragung vorzuziehen sein.

Die Sinteroberfläche des erfindungsgemäß hergestellten Formkörpers eignet sich infolge ihrer gewissen Rauhigkeit besonders gut für das häufig gewünschte Verblenden mittels keramischer oder anderer Werkstoffe, wie dies beispielsweise bei Kronen oder Brücken der Fall ist. Ferner ist es infolge der unschwer möglichen Einflussnahme auf die - die Steuerung bewirkende - Datei möglich, Korrekturen der Konfiguration des Formkörpers vorzunehmen, die aus den unterschiedlichsten Gründen (gegenüber dem abgetasteten Ergebnis) wünschenswert erscheinen mögen.

Vorzugsweise besteht das Pulver aus einer Legierung bei im Wesentlichen gleichen Anteilen der Legierungsbestandteile in jedem Pulverkorn. Dies stellt einen großen Vorteil gegenüber der herkömmlichen Fertigung von dentalen Formkörpern aus geschmolzenen Legierungen dar, weil keine Gefahr der Entmischung der Legierungsbestandteile in der Schmelze und/oder dem gegossenen Formkörper besteht. Überdies erfordert die Herstellung von Halbzeugen aus bestimmten Legierungen, die für dentale Zwecke besonders vorteilhaft einsetzbar sind, komplizierte und aufwendige Verfahrensmaßnahmen, wie etwa den Saugguss, während das Pulverisieren solcher Legierungen wesentlich unaufwendiger ist. Während aber eine aus solchem Pulver hergestellte Schmelze (zur anschließenden Herstellung von Guss-Formkörpern) wiederum der Gefahr der Entmischung und somit Inhomogenität unterliegt, behält ein erfindungsgemäß gesinterter Formkörper seine gleichmäßige Verteilung der Legierungsbestandteile bei.

Für den Einsatz beim erfindungsgemäßen Verfahren hat sich ein Metallpulver folgender Zusammensetzung bewährt, ohne dass das Verfahren hierauf beschränkt wäre:
Ni61, 4Cr22, 9M08, 8Nb3, 9Fe2, 5Mn0,4Ti0,1.

Die Erfindung betrifft die Anwendung des Laser-Sinterverfahrens, bei dem aus einem sinterfähigen Pulver schichtweise Formkörper aufgebaut werden, indem sukzessive jede Schicht des Pulvers einer zum lokalen Sintern führenden Energie eines Laserstrahls ausgesetzt wird, wobei die Führung des Laserstrahls über die jeweilige Pulverschicht der Steuerung durch Daten unterliegt, welche die Konfiguration des Formkörpers in dieser Schicht repräsentieren, zur Herstellung von Zahnersatz (Kronen, Brücken, Inlays u. dgl.) und/oder dentaler Hilfsteile, mit der Maßgabe, dass das Pulver aus einem biokompatiblen Werkstoff von unterschiedlicher Korngröße zwischen 0 und 50 µm besteht.

Dabei kann das Pulver aus einer Legierung bei im Wesentlichen gleichen Anteilen der Legierungsbestandteile in jedem Pulverkorn bestehen.

Die Erfindung betrifft weiterhin einen Formkörper zur Verwendung als Zahnersatz (Kronen, Brücken, Inlays u. dgl.) und/oder dentaler Hilfsteile, dadurch gekennzeichnet, dass er aus lasergesintertem Pulver aus einem biokompatiblen Werkstoff von unterschiedlicher Korngröße zwischen 0 und 50 µm besteht.

## Patentansprüche

1. Anwendung des Laser-Sinterverfahrens, bei dem aus einem sinterfähigen Pulver schichtweise Formkörper aufgebaut werden, indem sukzessive jede Schicht des Pulvers einer zum lokalen Sintern führenden Energie eines Laserstrahls ausgesetzt wird, wobei die Führung des Laserstrahls über die jeweilige Pulverschicht der Steuerung durch Daten unterliegt, welche die Konfiguration des Formkörpers in dieser Schicht repräsentieren, zur Herstellung von Zahnersatz (Kronen, Brücken, Inlays u. dgl.) und/oder dentaler Hilfsteile, mit der Maßgabe, dass das Pulver aus einem biokompatiblen Werkstoff von unterschiedlicher Korngröße zwischen 0 und 50 µm besteht.

2. Verfahren nach Anspruch 1, **dadurch gekennzeichnet, dass** das Pulver aus einer Legierung bei im Wesentlichen gleichen Anteilen der Legierungsbestandteile in jedem Pulverkorn besteht.

3. Formkörper zur Verwendung als Zahnersatz (Kronen, Brücken, Inlays u. dgl.) und/oder dentaler Hilfsteile,
**dadurch gekennzeichnet, dass** der Formkörper aus lasergesintertem Pulver aus einem biokompatiblen Werkstoff von unterschiedlicher Korngröße zwischen 0 und 50 µm besteht, wobei der Formkörper aus dem sinterfähigen Pulver schichtweise aufgebaut wird, indem sukzessive jede Schicht des Pulvers einer zum lokalen Sintern führenden Energie eines Laserstrahls ausgesetzt wird, wobei die Führung des Laserstrahls über die jeweilige Pulverschicht der Steuerung durch Daten unterliegt, welche die Konfiguration des Formkörpers in dieser Schicht repräsentieren.
